# FASCICULE DE BREVET EUROPEEN

(11) **EP 0 465 980 B1**
(45) Date de publication et mention de la délivrance du brevet: **01.03.1995**
(21) Numéro de dépôt: 91110889.2
(22) Date de dépôt: 01.07.1991
(51) Int. Cl.: G01F 11/20, G01F 11/24, B29B 7/24

(54) **Dispositif doseur de produits en grains ou pulvérulents et procédé de mélangeage de caoutchoucs crus utilisant ce dispositif**
Dosiervorrichtung für körnige oder pulverförmige Produkte und Rohkautschuk-Mischungsverfahren unter deren Verwendung
Dosing device for granular or powdered products and mixing method of raw rubber using the same

(30) Priorité: 12.07.1990 FR 9009011
(43) Date de publication de la demande: 15.01.1992
(73) Titulaire: SEDEPRO, F-75015 Paris (FR)
(72) Inventeur: Laurent, Daniel, F-38240 Meylan (FR)
(74) Mandataire: Bauvir, Jacques

(56) Documents cités:
- EP-A- 0 044 980
- EP-A- 0 212 256
- DE-A- 2 757 005
- SOVIET INVENTIONS ILLUSTRATED Section physique, semaine K22, abrégé no. H3852 SO/2, 13 juillet 1983, Derwent Publications Ltd., London,GB; & SU - A - 945665

## Description

La présente invention se rapporte au dosage quantitatif de produits en grains ou pulvérulents. Le dosage de tels produits, en poids ou en volume, comporte d'innombrables applications en milieu industriel. Dans certains cas, il est hautement souhaitable que la mesure de poids ou de volume puisse se faire en continu afin d'obtenir un débit non pulsé, ou aussi faiblement pulsé que possible.

Si le dosage quantitatif en continu est parfaitement maîtrisé pour des produits en phase liquide, il n'en va pas de même pour les produits se présentant sous forme de poudres ou même de grains. On connaît déjà de nombreux systèmes fonctionnant notamment par pesées. Cependant, toutes les techniques de dosage connues pour les produits en grains ou pulvérulents font appel à des asservissements, et/ou des moyens de calculs annexes, rendant ces sytèmes complexes, encombrants, coûteux et/ou peu fiables en milieu industriel, ou mal adpatés à fonctionner à des cadences variables. En outre, les systèmes volumétriques soulèvent des difficultés au niveau du remplissage et de l'évacuation du volume élémentaire de dosage. Les demandes de brevets EP-A-0 044 980, EP-A-0 212 256 et SU-A-945 665 illustrent des dispositifs doseurs, la dernière citée correspondant au préambule de la revendication 1.

La présente invention propose un dispositif simple, fiable et très précis de dosage quantitatif de tels produits, qui est parfaitement adapté au dosage en continu. L'invention trouve une application au mélangeage en continu de caoutchouc. la demande de brevet DE-A-27 57 005 illustre un mélangeur interne pour caoutchouc, fonctionnant par charges successives et non pas en continu.

Le dispositif doseur de produits en grains ou pulvérulents de l'invention comporte :
- des moyens d'alimentation en produit,
- un rotor comportant un plateau circulaire sur lequel le produit est délivré par les moyens d'alimentation, ledit plateau étant bordé par une paroi cylindrique percée d'au moins un évidement,
- un cylindre contenant le rotor, ajusté par rapport à ladite paroi cylindrique pour laisser un léger jeu permettant la rotation du rotor à l'intérieur du cylindre, le cylindre comportant une lumière disposée en regard du ou desdits évidements,
- un écran fixe par rapport au cylindre, disposé axialement au même niveau que ladite lumière, radialement à l'intérieur de la paroi cylindrique et ajusté par rapport à celle-ci pour permettre le mouvement du rotor, ledit écran débordant angulairement de part et d'autre de la lumière d'une valeur correspondant au moins à l'ouverture angulaire desdits évidements,
- des moyens commandant la rotation dudit rotor.

Les figures suivantes et la description qui s'y rapporte illustrent l'application de l'invention au dosage quantitatif du noir de carbone intervenant comme charge renforçante dans les mélanges de caoutchouc.
La figure 1 est une vue générale en élévation, présentant le dispositif incorporé dans une installation de mélangeage du caoutchouc ;
La figure 2 est une coupe selon II-II à la figure 1 ;

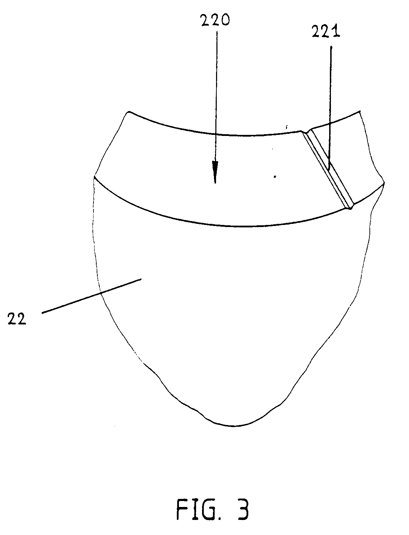

La figure 3 montre un détail d'exécution.

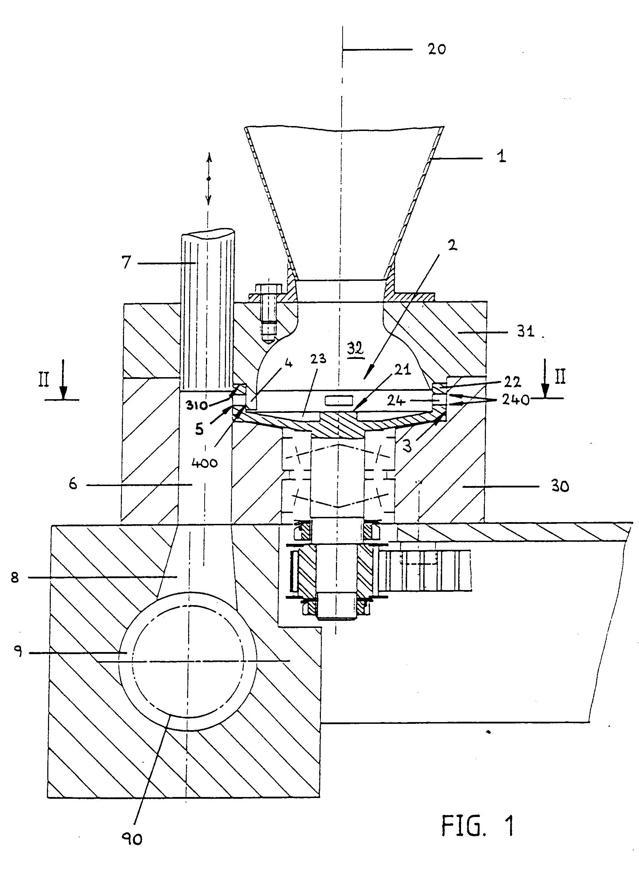

On aperçoit à la figure 1 que les moyens d'alimentation en produit sont constitués par une trémie 1 de remplissage. En amont de la trémie 1, on veille à ce que le débit moyen de noir corresponde au moins au débit délivré par le dispositif doseur sans autre condition que d'éviter toute rupture de l'alimentation que le dispositif doseur serait bien sûr incapable de compenser. Aucune précision n'est requise à ce stade. Pour éviter un blocage de la trémie par l'effet de voûte (le noir a facilement tendance à former une voûte en s'appuyant sur deux parois convergentes), on prévoit par exemple un agitateur (non représenté) à l'intérieur de la trémie 1. On peut d'ailleurs se servir de cet agitateur pour entraîner le noir vers le dispositif doseur, décrit ci-après. Le système alimenteur peut, bien entendu, avoir une allure très différente, de nombreuses solutions étant possibles pour assurer un gavage du dispositif doseur. La conception du système alimenteur dépend dans une large mesure du produit dosé qui, dans l'industrie du caoutchouc, peut être du noir de carbone, du soufre, du kaolin, de nombreux accélérateurs, ou autres.

Ce dispositif est basé sur la centrifugation du noir qui tombe sur un plateau 21 entraîné en rotation. On aperçoit le rotor 2 constitué par ledit plateau 21 circulaire bordé par une paroi cylindrique 22. Le rotor 2 est libre de tourner à l'intérieur d'un cylindre 3 réalisé dans le corps 30. Une cloche 31 supérieure délimite une enceinte 32 dans laquelle le noir de carbone est centrifugé. L'axe de rotation 20 du rotor 2 est vertical et le noir tombe sur le plateau 21 par simple gravité. Il se trouve alors entraîné en rotation ; il apparaît une force centrifuge qui a pour effet de le plaquer contre la paroi cylindrique 22 solidaire du plateau 21. De préférence, afin de garantir l'entraînement en rotation du noir, on prévoit sur le plateau 21 des nervures 23 radiales faisant légèrement saillie par rapport audit plateau 21.

Le dispositif fonctionne parfaitement même lorsque ladite enceinte 32 est totalement remplie de noir de carbone. Il suffit donc de gaver le dispositif doseur, c'est-à-dire de l'alimenter à refus, pour être certain qu'il n'y ait aucune rupture d'alimentation. L'effet centrifugation rend négligeable l'effet de la gravitation sur le fonctionnement du dispositif. L'orientation du plateau 21 peut donc s'éloigner très largement de l'horizontale, les contraintes dictant l'orientation venant plutôt de l'alimentation en noir du dispositif.

La paroi cylindrique 22 comporte au moins un évidement 24 (ici quatre) percé au travers de la paroi cylindrique 22. Un tel évidement constitue une sorte de réservoir de volume parfaitement définissable. Pendant la majeure partie d'un tour du rotor 2, l'extrémité de l'évidement 24 est masquée par le cylindre 3. A un moment donné, chaque évidement 24 disparaît derrière un écran 4 immobile, solidaire de la cloche 31, elle-même liée au corps 30. L'écran 4 est disposé axialement au même niveau que lesdits évidements 24 et radialement à l'intérieur de la paroi cylindrique 21 en laissant par rapport à celle-ci le jeu juste nécessaire pour permettre le mouvement. On a constaté, avec le type de noir de carbone indiqué ci-dessous, qu'avec un jeu de 50 micromètres, le noir ne s'incorpore pas entre le cylindre 3 et la paroi cylindrique 22 du rotor 2. Donc le volume de chaque réservoir formé par les évidements 24 est délimité par les faces 240 de l'évidement 24 dans l'épaisseur de la paroi cylindrique 22, par le cylindre 3 aménagé dans le corps 30, et par la face radialement extérieure 400 de l'écran 4, face obligatoirement conformée en arc de cylindre.

Si l'alimentation est suffisante, le noir plaqué contre la paroi 22 par la force centrifuge remplit nécessairement tous les évidements 24.

L'un après l'autre, les évidements 24 passent derrière l'écran 4 puis arrivent au regard d'une lumière 5 aménagée dans le cylindre 3. De préférence, l'écran 4 déborde angulairement de part et d'autre de la lumière 5 au moins d'une valeur correspondant à l'ouverture angulaire desdits évidements 24, de sorte que le volume définit par chaque évidement 24 (comme expliqué ci-dessus) ne puisse jamais être en communication à la fois avec la lumière 5 et l'enceinte 32 contenant le noir déposé par les moyens d'alimentation. Le noir est ainsi exactement dosé quantitativement par un prélèvement volumétrique précis.

Il faut noter que l'on souhaite incorporer un poids donné de noir de carbone à un poids donné de caoutchouc. Après étalonnage pour chaque type de noir que l'on souhaite doser, ou en général pour chaque type de matière (produits en grains ou produits pulvérulents), on accède à une mesure de poids par le biais d'une mesure de volume.

Le dispositif doseur de l'invention présente une fuite possible entre son organe rotatif et son organe fixe, donc entre l'extrémité 220 de la paroi cylindrique 22 du rotor 2 et l'extrémité correspondante 310 de la cloche 31. Il convient d'ajuster le jeu au minimum possible. Cependant, la centrifigation du noir risque malgré tout de provoquer une légère incorporation de noir de carbone entre rotor 2 et stator constitué ici par la cloche 31 et par le corps 30 dans lequel est usiné le cylindre 3. Pour éviter un colmatage progressif qui pourrait détériorer le dispositif doseur, on a prévu une rainure 221 radiale, à un endroit quelconque de l'extrémité 220 de la paroi cylindrique 22. Ainsi, par un raclage, on récolte le noir qui avait commencé de migrer entre le rotor 2 et la cloche 31, puis à chaque tour, on l'expulse par la lumière 5, adaptée à cette fin, on bien on l'expulse par une ouverture prévue pour récolter cette fuite de noir, n'importe où sur le cylindre 3 pourvu qu'elle puisse se trouver face à la rainure 221. Cependant, la quantité de noir qui peut fuir est infinitésimale par rapport au volume de noir dosé et l'on peut donc rejeter la fuite dans le volume dosé.

Après dosage, comme dans l'exemple illustrant l'invention, on incorpore en continu le noir de carbone à du caoutchouc non vulcanisé. Le procédé de mélangeage en continu de caoutchouc non vulcanisé, consistant à introduire en continu un élastomère dans une chambre de mélangeage 9, et à y incorporer en continu un produit pulvérulent exactement dosé, est caractérisé en ce que le dosage consiste à alimenter en produit pulvérulent un rotor 2 comportant un plateau circulaire 21 sur lequel le produit est délivré par les moyens d'alimentation, ledit plateau étant bordé par une paroi cylindrique 22 percée d'au moins un évidement 24, à faire tourner le rotor 2 dans un cylindre 3 contenant le rotor 2, ajusté par rapport à ladite paroi cylindrique 22 pour laisser un léger jeu permettant la rotation du rotor 2 à l'intérieur du cylindre 3, le cylindre 3 comportant une lumière 5 disposée axialement en regard du ou desdits évidements 24, à disposer un écran 4 fixe par rapport au cylindre 3, axialement au même niveau que ladite lumière 5, radialement à l'intérieur de la paroi cylindrique 22, ajusté par rapport à celle-ci pour permettre le mouvement du rotor 2, ledit écran 4 débordant angulairement de part et d'autre de la lumière 5 d'une valeur correspondant au moins à l'ouverture angulaire desdits évidements 24.

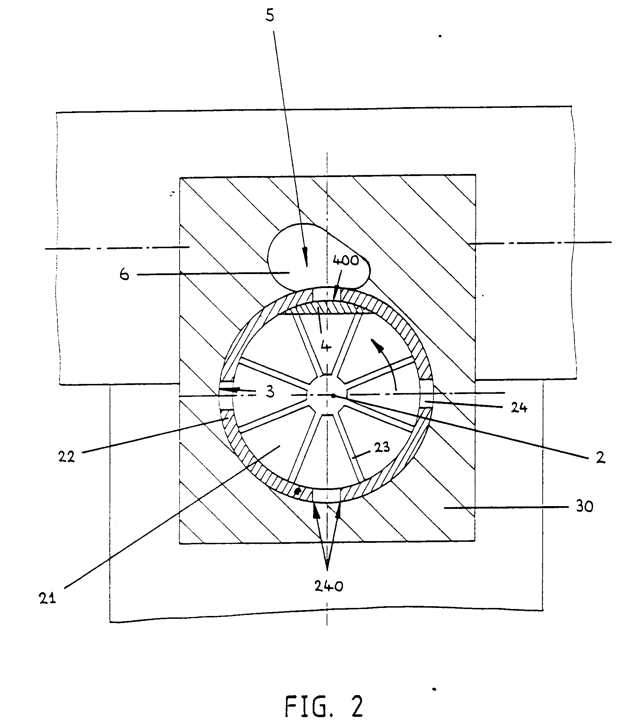

La lumière 5 débouche dans une chambre de transfert 6 dans laquelle peut coulisser un piston 7 refoulant le noir dans une chambre de mélangeage 9. La forme de la chambre de transfert 6 telle qu'elle apparaît bien à la figure 2 est dictée par la direction de centrifugation du noir dès qu'il n'est plus contenu par le cylindre 3. La lumière 5 est donc l'interface commune entre le cylindre 3 et la chambre de transfert 6. Dès que le piston 7 descend pour refouler le noir, il occulte la lumière 5 et interrompt le dosage quantitatif puisque les évidements 24 ne peuvent plus se vider du noir qu'ils contiennent. Un organe de mélangeage 90 rotatif, comme on en trouve de nombreuses descriptions dans l'état de la technique, est en mouvement dans la chambre de mélangeage 9 .

Grâce à la descente du piston 7, l'incorporation du noir au caoutchouc cru peut se faire sous pression. Entre la chambre de transfert 6 et la chambre de mélangeage 9, on a prévu un divergent 8 dans lequel la section de passage du noir est croissante. Ainsi, grâce à l'effet de voûte évoqué ci-dessus, on obtient naturellement un effet anti-retour.

L'ensemble d'incorporation de noir de carbone à du caoutchouc cru se prête particulièrement bien à l'introduction du noir sous pression, et en continu, rendant concevable une préparation réellement continue des mélanges de caoutchouc.

## Revendications

1. Dispositif doseur de produits en grains ou pulvérulents comportant :
- des moyens d'alimentation en produit,
- un rotor (2) comportant un plateau circulaire (21) sur lequel le produit est délivré par les moyens d'alimentation,
- des moyens commandant la rotation dudit rotor (2),
- ledit plateau est bordé par une paroi cylindrique (22) percée d'au moins un évidement (24) :
- un cylindre (3) contenant le rotor (2), ajusté par rapport à ladite paroi cylindrique (22) pour laisser un léger jeu permettant la rotation du rotor (2) à l'intérieur du cylindre (3),
caractérisé en ce que le cylindre (3) comporte une lumière (5) disposée axialement en regard du ou desdits évidements (24), et en ce que le dispositif comporte un écran (4) fixe par rapport au cylindre (3), disposé axialement au même niveau que ladite lumière (5), radialement à l'intérieur de la paroi cylindrique (22), ajusté par rapport à celle-ci pour permettre le mouvement du rotor (2), ledit écran (4) débordant angulairement de part et d'autre de la lumière (5) d'une valeur correspondant au moins à l'ouverture angulaire desdits évidements (24).

2. Dispositif selon la revendication 1, caractérisé en ce que le plateau (21) comporte des nervures radiales (23) en saillie.

3. Dispositif selon l'une des revendications 1 ou 2, caractérisé en ce que l'extrémité (220) de la paroi cylindrique (22) comporte une rainure (221) orientée radialement.

4. Ensemble d'incorporation de noir de carbone comportant une chambre de mélangeage (9) et un dispositif doseur selon l'une des revendications 1 à 3, caractérisé en ce qu'il comporte une chambre de transfert (6) placée en aval de la lumière (5), chambre de transfert (6) dans laquelle peut coulisser un piston de refoulement (7), ladite chambre de transfert (6) étant mise en communication avec la chambre de mélangeage (9) via un divergent (8).

5. Procédé de mélangeage en continu de caoutchouc non vulcanisé, consistant à introduire en continu un élastomère dans une chambre de mélangeage (9), et à doser et à y incorporer en continu un produit pulvérulent, caractérisé en ce que le dosage du produit pulvérulent consiste à alimenter en produit pulvérulent un rotor (2) comportant un plateau circulaire (21) sur lequel le produit est délivré par les moyens d'alimentation, ledit plateau étant bordé par une paroi cylindrique (22) percée d'au moins un évidement (24), à faire tourner le rotor (2) dans un cylindre (3) contenant le rotor (2), ajusté par rapport à ladite paroi cylindrique (22) pour laisser un léger jeu permettant la rotation du rotor (2) à l'intérieur du cylindre (3), le cylindre (3) comportant une lumière (5) disposée axialement en regard du ou desdits évidements (24), à disposer un écran (4) fixe par rapport au cylindre (3), disposé axialement au même niveau que ladite lumière (5), radialement à l'intérieur de la paroi cylindrique (22), ajusté par rapport à celle-ci pour permettre le mouvement du rotor (2), ledit écran (4) débordant angulairement de part et d'autre de la lumière (5) d'une valeur correspondant au moins à l'ouverture angulaire desdits évidements (24).

## Patentansprüche

1. Dosiervorrichtung für körnige oder pulverförmige Produkte mit
- Mitteln zur Zuführung des Produkts,
- einem Rotor (2) mit einer kreisförmigen Platte (21), auf welche das Produkt von den Zuführungsmitteln geliefert wird,
- Mitteln zur Steuerung der Drehung des Rotors (2),
- wobei die Platte mit einer durch mindestens eine Ausnehmung (24) durchbohrten zylindrischen Wandung (22) eingefaßt ist,
- einem den Rotor enthaltenden Zylinder (3), der zur zylindrischen Wandung (22) so eingestellt ist, daß ein geringes Spiel für die Drehung des Rotors (2) innerhalb des Zylinders (3) freigelassen ist,
dadurch gekennzeichnet, daß
der Zylinder (3) eine axial gegenüber der Ausnehmung oder den Ausnehmungen (24) angeordnete Öffnung (5) aufweist und daß die Vorrichtung bezüglich des Zylinders (3) festen Schirm (4) aufweist, der axial auf der gleichen Ebene wie die Öffnung (5), radial innerhalb der zylindrischen Wandung (22) angeordnet und in bezug auf diese Wandung so eingestellt ist, daß die Bewegung des Rotors (2) ermöglicht wird, wobei der Schirm (4) im Winkel auf jeder Seite der Öffnung (5) um einen Wert übersteht, der mindestens dem Öffnungswinkel der Ausnehmungen (24) entspricht.

2. Vorrichtung nach Anspruch 1, dadurch gekennzeichnet, daß die Platte (21) vorstehende radiale Rippen (23) aufweist.

3. Vorrichtung nach einem der Ansprüche 1 oder 2, dadurch gekennzeichnet, daß das Ende (220) der zylindrischen Wandung (22) eine radial ausgerichtete Nut (221) aufweist.

4. Einheit zum Beimengen von Rußschwarz, mit einer Mischkammer (9) sowie einer Dosiervorrichtung nach einem der Ansprüche 1 bis 3, dadurch gekennzeichnet, daß sie eine nach der Öffnung (5) angeordnete Transportkammer (6) aufweist, in welcher ein Förderkolben (7) verschiebbar ist, wobei die Transportkammer (6) mit der Mischkammer (9) über eine Aufweitung (8) in Verbindung gebracht ist.

5. Kontinuierliches Mischverfahren zur Mischung von nicht vulkanisiertem Kautschuk, bestehend darin, daß ein Elastomer kontinuierlich einer Mischkammer (9) zugeführt und ein pulverförmiges Produkt dosiert und kontinuierlich beigemengt wird,
dadurch gekennzeichnet, daß
die Dosierung des pulverförmigen Produkts darin besteht, mit dem pulverförmigen Produkt einen Rotor (2) zu beschicken, der eine kreisförmige Platte (21) aufweist, auf welche das Produkt von den Zuführungsmitteln geliefert wird, wobei die Platte von einer durch mindestens eine Ausnehmung (24) durchbohrten zylindrischen Wandung (22) eingefaßt ist; den Rotor (2) in einem den Rotor enthaltenden Zylinder (3) laufen zu lassen, der in bezug auf diese Wandung (22) so eingestellt ist, daß ein geringes Spiel für die Drehung des Rotors (2) innerhalb des Zylinders (3) freigelassen wird, wobei der Zylinder (3) eine axial gegenüber der Ausnehmung oder den Ausnehmungen (24) angeordnete Öffnung (5) aufweist; einen bezüglich des Zylinders (3) festen Schirm (4) axial auf der gleichen Ebene wie die Öffnung (5), radial innerhalb der zylindrischen Wandung (22) anzuordnen, der in bezug auf diese Wandung so eingestellt ist, daß die Bewegung des Rotors (2) ermöglicht wird, wobei der Schirm (4) im Winkel auf jeder Seite der Öffnung (5) um einen Wert übersteht, der mindestens dem Öffnungswinkel der Ausnehmungen (24) entspricht.

## Claims

1. A metering device for granular or pulverulent products comprising:
- product feed means;
- a rotor (2) comprising a circular plate (21) on to which the product is delivered by the feed means,
- means driving the rotation of the said rotor (2),
- the said plate being bordered by a cylindrical wall (22) bored with at least one channel (24),
- a cylinder (3) containing the rotor (2), adjusted with respect to the said cylindrical wall (22) so as to leave a slight clearance which permits the rotation of the rotor (2) inside the cylinder (3),
characterised in that the cylinder (3) comprises a port (5) disposed axially opposite the said channel or channels (24), and in that the device comprises a screen (4) which is fixed with respect to the cylinder (3) and disposed axially at the same level as the said port (5), radially inward of the cylindrical wall (22), and adjusted with respect to the latter so as to permit movement of the rotor (2), the said screen (4) extending angularly beyond both sides of the port (5) by an amount corresponding at least to the angular opening of the said channels (24).

2. A device according to Claim 1, characterised in that the plate (21) comprises radially projecting ribs (23).

3. A device according to either one of claims 1 or 2, characterised in that the end (220) of the cylindrical wall (22) comprises a radially oriented groove (221).

4. A unit for the incorporation of carbon black comprising a mixing chamber (9) and a metering device according to any one of claims 1 to 3, characterised in that it comprises a transfer chamber (6) located downstream of the port (5), in which transfer chamber (6) a delivery piston (7) can slide, the said transfer chamber (6) being placed in communication with the mixing chamber (9) via a diverging passage (8).

5. A method for the continuous compounding of uncured rubber, consisting of continuously introducing an elastomer into a mixing chamber (9) and metering and continuous incorporating therein a pulverulent product, characterised in that the metering of the pulverulent product consists of feeding pulverulent product to a rotor (2) comprising a circular plate (21) on to which the product is delivered by feed means, the said plate being bordered by a cylindrical wall (22) bored with at least one channel (24), causing the rotor (2) to turn in a cylinder (3) containing the rotor (2), which is adjusted with respect to the said cylindrical wall (22) so as to leave a slight clearance which permits the rotation of the rotor (2) inside the cylinder (3), the cylinder (3) comprising a port (5) disposed axially opposite the said channel or channels (24), providing a screen (4) fixed with respect to the cylinder (3) and disposed axially at the same level as the said port (5) radially inwards of the cylindrical wall (22) and adjusted with respect to the latter so as to permit movement of the rotor (2), the said screen (4) extending angularly beyond both sides of the port (5) by an amount corresponding at least to the angular opening of the said channels (24).
